# EUROPEAN PATENT APPLICATION

(11) **EP 1 791 346 A1**
(43) Date of publication of application: **30.05.2007**
(21) Application number: 05257262.5
(22) Date of filing: 25.11.2005
(51) Int. Cl.: H04N 5/00, H04N 17/00

(54) **Backup system for video and signal processing systems**

(71) Applicant: BRITISH TELECOMMUNICATIONS public limited company, London EC1A 7AJ (GB)
(72) Inventor: Jeffery, Richard Ian Michael, Saxmundham, Suffolk IP17 1EF (GB); Walker, Matthew David, Felixstone, Suffolk IP11 9SN (GB)
(74) Representative: Lloyd, Barry George William

(57) **Abstract**

A video server has a plurality of main encoders E1 ... E11 and at least one backup encoder ES1 ... ES3. First monitoring means MI monitors the integrity of signals at the inputs to the main encoders and produces a first alarm signal in the event of a fault condition, whilst second monitoring means MO monitors the integrity of signals at the outputs of the main encoders and produces a second alarm signal in the event of a fault condition. In the event of a second alarm signal in respect of a main encoder in the absence of a first alarm signal in respect of the same main encoder, control means (CU) operates to switch a backup encoder into service in lieu thereof.

## Description

The present invention is concerned with backup systems for video and other signal processing systems.

It is well known to provide duplicate, redundant signal feeds, and to switch to a backup feed if a main feed fails see our European patent 1,210,586 (US 6,765865). Also, it is known to provide backup encoders so that if an encoder in service fails, this can be recognised and a backup encoder switched in its place, as described in U.S. patent 5,835,493.

The present invention is defined in the claims.

Some embodiments of the invention will now be described, by way of example, with reference to the accompanying drawings.

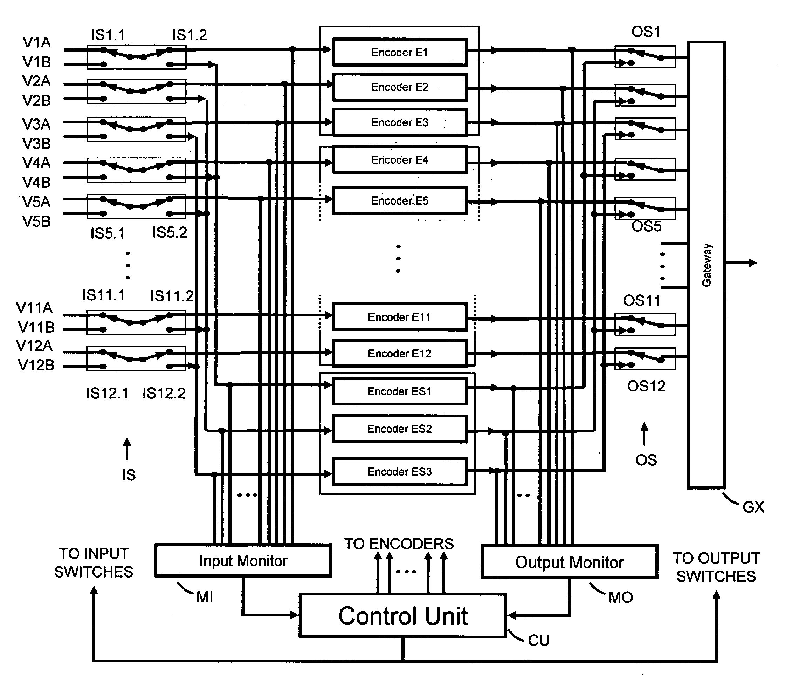

The system shown in Figure 1 can accommodate 12 video sources and thus has 12 main video inputs V1A, V2A, ... V12A. Each source is expected to have not only a main feed but also a duplicate or backup feed, and these are connected to backup video inputs V1B, V2B, ... V12B. Typically these would be SDI (serial digital interface) inputs.

The system has 12 video encoders E1, E2, ... E12 and three backup encoder EB1, EB2, EB3. The inputs V1A, V1B etc. are connected to the inputs of the encoders via an input switch IS which is under the control of a control unit C. In order to illustrate its function, the switch IS is represented as twelve pairs of changeover switches IS1.1, IS1.2, ... ISj.1, ISj.2 etc. Taking the upper inputs as an example (the others being identical), normally the input V1A is passed by the first switch IS1.1 to the second switch IS1.2 which in turn routes the signal to the first video encoder E1. Under certain circumstances, as will be described presently, the first switch may be thrown so as to receive video from the backup input V1B instead of the main input V1A, and/or the second switch may be thrown so as to conduct the selected video signal to the backup encoder ES1 instead of to the main encoder E1.

The video outputs from the encoders are fed to an output gateway GX which serves as an interface to a telecommunications network N. As shown, the encoders feed the gateway via changeover switches OS1, OS2, ... , OS12. Each switch normally conducts encoded video from a respective one of the main encoders E1, E2, ..., E12 to the gateway, but may be switched over to take the output from the corresponding backup encoder ES1, ES2, ES3.

The control unit CU which controls the operation of the switches IS, OS, and the encoders E1, ..., ES3 is supplied with status information by two monitoring units. An input monitoring unit MI monitors the video signals at the inputs to the encoders E1, ... E12, ES1, ES2, ES3. In the event of a fault in any of the video feeds it produces an alarm signal Al (e.g. in SNMP (simple network management protocol) format) along with the number (s)of the feed(s) affected. Similarly, an output monitoring unit monitors the outputs of the encoders E1, ... , E12 (and possibly also the backup encoders E1, E2, E3) and in the event of a fault in any of the video feeds it produces an SNMP alarm signal AO along with the number (s)of the encoders(s) affected.

The operation of the control unit CU is shown in the flowchart of figure 2 and is as follows:
- upon receipt of an alarm signal AI from the monitoring unit MI in respect of video feed j, to throw the corresponding switch ISj.1 so as to receive the backup video signal at the backup input VBj instead of that at the main input VBj (or *vice versa).*
- upon receipt of an alarm signal AO from the monitoring unit MO in respect of encoder j, to switch into operation the appropriate one of the backup encoders in lieu of the encoder Ej; this switching however is conditional on there being no alarm signal from the monitoring unit MI in respect of the input signal to this encoder.

This switchover is performed by
(a) throwing the corresponding switch ISj so as to route the encoded video signal to the appropriate one of the backup encoders instead of encoder Ej;
(b) starting up the backup encoder;
(c) throwing the switch OSj to feed the output of this backup encoder to the output gateway GX;
(d) shutting down the encoder Ej.

Notice in particular the condition that a backup encoder is not brought into service for a video feed that shows a fault at the encoder input. Although switching in such circumstance would probably not make the channel being switched any worse, it would be unlikely to improve it, yet it would (as long as the number of backup encoders is less than the number of main encoders) weaken the protection afforded to the other encoders.

When a faulty encoder has been repaired or replaced, is it switched back into service, and the backup encoder released, by manual intervention.

We will now describe further details of our preferred practical implementation (which differs from the above in one or two respects).

The input switch IS is preferably implemented as a crosspoint switch; for 2 +12 video feeding 12+3 encoders as in figure 1 a 24x15 switch is required - in the prototype a 32x16 Quartz switch manufactured by Quartz Electronic Ltd., Reading , Berkshire, England was used.

In our preferred implementation, the output switch OS is omitted: instead, we use an output server gateway with 15 input channels that receive the outputs of all fifteen encoders, running Windows Media Server software. This maintains a playlist for each of 12 output channels, that defines, in order of precedence, which inputs the signal should be taken from: if an input fails, the server switches to the next entry. To implement the operation described, each playlist consists of two entries, that point to the main encoder and to the appropriate backup encoder for that channel. The switchover sequence is as given above, except that the step (b) of throwing the switch is omitted: the gateway may switch to the backup encoder as soon as the fault appears, but if not, will do so when the main encoder is switched off at step (d).

The encoders used were implemented by means of four general-purpose computers, H-P type DL380, each fitted with three Osprey 560 video capture cards (from ViewCast) running Windows Media Encoder SDK. In the architecture shown, the three backup encoders are all on the same computer and each serves three main encoders that are on three different computers, in order that, in the event of a hardware fault affecting three encoders at once, all three have backups available. A more flexible usage of the backup encoder, so that any backup encoder could be dynamically allocated to replace any main encoder would be possible, but would preclude the "playlist" output switching unless the playlists were dynamically updated, and a switching arrangement as in Figure 1 (with additional switch positions for the other backup encoders) would probably be preferred. For example, to handle dynamic server side playlist creation a small amount of control code could be written in ASP or a similar Web Services Application language, and run under a web service on the media server. The role of the control code would be to receive any signals from the control unit (CU) with regard to switching between encoders and to format the signal information into a format that can then be used to dynamically change the encoder sources for the 12 output channels.

If the server gateway GX is using the Windows Media Server application on a Windows 2003 server based computer, then IIS's support for ASP could be used to create an ASP object written in either Javascript or VBscript which receives the control messages from the CU, and then performs two functions (in order),
1) Creates a SMIL based server side playlist incorporating the details of the encoder to be used for the associated output channel source.
2) Refreshes the appropriate output channel so that it uses the settings from the newly created SMIL playlist.

This is basically repurposing the details of the SNMP control messages into XML based SMIL files and then triggering the Windows Media server to refresh the required publishing point (output channel).

The input monitoring unit MI could be a fairly simple device that merely signalled a fault when the signal was entirely absent (implemented by a simple voltage threshold) or could be a more sophisticated device capable of recognising loss of (or errors in) synchronisation information, freeze frame, and the like. A suitable unit would be a transport integrity monitor configured to perform some or all of the tests specified in the ETSI (European Telecommunications Standards Institute) Technical Report ETR 290 (May 1997) "Digital Video Broadcasting (DVB); Measurement guidelines for DVB systems", for example the TIM offered by BT plc or by Video Products Group Inc.

The encoders E1 etc. can be any desired type of encoder.

In its simplest form, the monitor MO could be a detector, to detect the absence of signal. We prefer, however to provide the capability to detect other types of error too. One option is that the monitor would be a decoder - for example, where Windows Media Encoders are used, the monitor could utilise a Windows Media Players. This could be a complete decoder, but, since its decoded video output is not used could be a decoder with the omission of any parts which do not contribute to the generation of error messages. Such a monitor could be enhanced to include detection of types of error that a standard decoder would not recognise. Thus, it might count sequence numbers and generate errors if the numbers were non-sequential; measure jitter, delay etc.; and/or alarms might be generated in the event of connection loss, stream loss, packet loss in excess of a threshold or other error thrown from server.

If desired, the monitoring unit could also monitor the gateway output and/or the content distribution and/or status of a dummy user in the network.

For completeness, the system could also include a backup gateway GY (not shown) which is in all respects identical to the gateway GX and receives exactly the same inputs. Backup management for the gateways is not however managed by the control unit. Rather, a client requiring service from the gateway sends requests to the gateway GX: if it receives no response, it then sends a similar request to the backup server GY.

Note that, although not essential, the output monitor MO may also monitor the outputs of the backup encoders. In the event of a fault, the system could then respond by attempting to revert to the original main encoder. The playlist can be made cyclic, to accommodate this possibility, and also means that, after repair, a faulty encoder can be brought back into service simply by starting the repaired main encoder and shutting down the backup encoder.

## Claims

1. A video server comprising
a plurality of main encoders (E1 ... E11);
at least one backup encoder (ES1 ... ES3);
first monitoring means (MI) operable to monitor the integrity of signals at the inputs to the main encoders and to produce a first alarm signal in the event of a fault condition;
second monitoring means (MO) operable to monitor the integrity of signals at the outputs of the main encoders and to produce a second alarm signal in the event of a fault condition; and
control means (CU) operable in response to the occurrence of a second alarm signal in respect of a main encoder in the absence of a first alarm signal in respect of the same main encoder to switch a backup encoder into service in lieu thereof.

2. A video server according to claim 1 in which the backup encoders are fewer in number than the main encoders.

3. A video server according to claim 1 having pairs of video inputs (V1A, V1B ...)for receiving identical redundant feeds, the control means being operable in the event of a first alarm signal in respect of an encoder to switch that encoder input from its current video input to the other video input of the same pair.

4. A video server according to any one of the preceding claims comprising a first network interface (GX) connected to receive outputs of the encoders and a second network interface (GY) providing redundancy.

5. A video server according to claim 4 in which the first and second network interfaces (GX, GY) both simultaneously receive the same encoder outputs, whereby a client that has made an unsuccessful request to one interface may make a request to the other interface for the same material.

6. A signal processing system comprising
a plurality of main signal processing units;
at least one backup signal processing unit;
first monitoring means operable to monitor the integrity of signals at the inputs to the main signal processing units and to produce a first alarm signal in the event of a fault condition;
second monitoring means operable to monitor the integrity of signals at the outputs of the main signal processing units and to produce a second alarm signal in the event of a fault condition; and
control means operable in response to the occurrence of a second alarm signal in respect of a main signal processing unit in the absence of a first alarm signal in respect of the same main signal processing unit to switch a backup signal processing unit into service in lieu thereof.
